# EUROPÄISCHE PATENTSCHRIFT

(11) **EP 2 813 311 B1**
(45) Veröffentlichungstag und Bekanntmachung des Hinweises auf die Patenterteilung: **06.09.2017**
(21) Anmeldenummer: 14166084.5
(22) Anmeldetag: 25.04.2014
(51) Int. Cl.: B23K 9/04, B23K 9/23, B23K 28/02, B21C 25/02, G01N 3/56, B23P 15/24, C23C 20/04

(54) **Verfahren zum Herstellen eines Strangpresswerkzeugs**
Method for producing a strand pressing tool
Procédé destiné à la fabrication d'un outil de presse à filage

(30) Priorität: 10.06.2013 DE 102013106010
(43) Veröffentlichungstag der Anmeldung: 17.12.2014
(73) Patentinhaber: WEFA Singen GmbH, 78224 Singen (DE)
(72) Erfinder: Maier Joachim, 78224 Singen (DE); Maier Oliver, 78315 Radolfzell (DE)
(74) Vertreter: Behrmann, Niels

(56) Entgegenhaltungen:
- WO-A1-99/12671
- WO-A1-2012/175147
- JP-A- H0 699 216
- JP-A- S5 910 471

## Beschreibung

Die vorliegende Erfindung betrifft das Gebiet der Strangpresstechnik, dort ein Verfahren zum Herstellen eines Strangpresswerkzeugs. Geeignetes Strangpressmaterial, typischerweise eine Aluminiumlegierung, wird unter hohem Druck durch eine von einem Strangpresswerkzeug begrenzte Öffnung gepresst, besitzt während dieses Pressvorgangs und beim Durchtritt durch das Werkzeug eine duktile, zähflüssige Konsistenz und kann so, je nach Ausgestaltung des Strangpresswerkzeugs, in eine geeignete, auch komplexe Profilkonfiguration geformt werden.

Nicht zuletzt aufgrund der besonderen Umstände der Strangpresstechnologie, nämlich ein kontinuierliches Entlangfließen des duktilen Strangpressmaterials an der (stationären) Funktionsfläche des Werkzeugs unter hohem Druck und bei hoher Temperatur, sind besondere Erfordernisse an die Ausgestaltung des Werkzeugs bzw. an das für das Werkzeug eingesetzte Material zu stellen. Einerseits ist insbesondere die den Kontaktbereich mit dem Strangpressmaterial ausbildende Funktionsfläche besonders verschleißfest zu realisieren, was typischerweise über eine geeignete, die Oberflächenhärte erhöhende Beschichtung bzw. Oberflächenbehandlung (etwa Nitrieren od.dgl.) erreicht wird. Andererseits erfordern die besonderen Bedingungen des Strangpressens sowie die besonderen Geometrien (etwa lange Zungen oder dünne Stege) der herzustellenden Strangpressprofile eine gewisse Zähigkeit des Werkzeugs, so dass sich etwa der ansonsten denkbare Einsatz von besonders harten (aber spröden) Werkstoffen wie etwa Hartmetallen oder Schnellstählen zur Herstellung eines Strangpresswerkzeugs häufig verbietet. Auch stellen wiederum die hohen Betriebstemperaturen beim Strangpressen zwischen typischerweise 550°C und 640°C erhöhte Anforderungen an die Dauerwarmfestigkeit der eingesetzten Stahlwerkstoffe für ein Werkzeug, wodurch sich etwa Kaltarbeitsstähle als Werkstoff für ein Strangpresswerkzeug weniger eignen.

Aus dem Stand der Technik ist es bekannt und zur Erhöhung der Verschleißfestigkeit (und damit der Standzeit) eines Strangpresswerkzeugs bewährt, eine Beschichtung mittels eines CVD-Verfahrens aufzubringen. So offenbart etwa die EP 1 011 884 B1 der Anmelderin ein Verfahren zur Beschichtung eines Strangpresswerkzeugs mittels Hochtemperatur-CVD, bei welchem eine metallische Phase (in ansonsten bekannter Weise) durch das CVD-Verfahren auf die Oberfläche des geeignet vorbereiteten und ausgeformten Werkzeugs gebracht wird; eine bevorzugte Verarbeitungstemperatur eines solchen Verfahrens liegt oberhalb von 950°C, um eine optimale Reaktivität der eingesetzten Gase für die Gasabscheidung sicherzustellen.

Aus der WO 2012/175147 A1 der Anmelderin ist es ferner bekannt, ein Strangpresswerkzeug im sogenannten Mitteltemperaturbereich mittels chemischer Gasphasenabscheidung (CVD) zu beschichten. Ein solches Verfahren, insbesondere bei erhöhter Kohlenstoffkonzentration im Abscheidungsgas, führt zu erhöhter Zähigkeit und Elastizität des Strangpresswerkzeugs an der (auf diese Weise beschichteten) Funktionsfläche, was aus den eingangs genannten Gründen günstig für die Strangpresstechnologie ist.

Schließlich ist es als aus dem Stand der Technik bekannt vorauszusetzen, hartmetallische Werkstoffe oder aus Nicht-Eisenlegierungen bestehende Werkstoffe zur Herstellung eines Strangpresswerkzeugs zu benutzen. Die hohe Sprödigkeit dieser Werkstoffe, verbunden mit problematischer Formgebung bei der Werkzeugherstellung, hat jedoch dazu geführt, dass sich diese Technologien im praktischen Einsatz nur in Grenzen durchgesetzt haben.

Als zusätzlicher Nachteil kommen die hohen Kosten dieser Werkstoffe, welche eine Realisierung von Strangpresswerkzeugen selten wirtschaftlich ermöglichen.

Aufgabe der vorliegenden Erfindung ist es daher, ein Verfahren zum Herstellen eines Strangpresswerkzeugs zu schaffen, welches, gegenüber der als gattungsbildend angesehenen Technologie gemäß EP 1 011 884 B1, nochmals verbesserte Oberflächeneigenschaften, insbesondere im Bereich der hochbelasteten Funktionsflächen aufweist, insbesondere eine weiter verbesserte Verschleißfestigkeit ermöglicht, damit längere Werkzeug-Standzeiten im Strangpresseinsatz, gleichermaßen eine hinreichende Zähigkeit und geringe Sprödigkeit des Werkzeugs bei geringen Materialkosten gestattet.

Die Aufgabe wird durch das Verfahren mit den Merkmalen des Hauptanspruchs gelöst; vorteilhafte Weiterbildungen der Erfindung sind in den Unteransprüchen beschrieben. Es wird zusätzlich Schutz beansprucht für ein Verfahren zum Messen eines Oberflächenverschleißes eines mit dem Verfahren nach einem der Ansprüche 1 bis 12 hergestellten Strangpresswerkzeugs. In erfindungsgemäß vorteilhafter Weise sieht das Verfahren gemäß Hauptanspruch zunächst vor, dass auf einen typischerweise aus einem Warmarbeitsstahl realisierten und geeignet in eine Werkzeug-Rohform vorgeformten bzw. vor-zerspanten Werkzeug-Trägerkörper eine Auftragsschicht durch einen gefügewirksamen Auftragsprozess aufgebracht wird. Erfindungsgemäß besteht diese Auftragsschicht aus einem Kobalt-haltigen Werkstoff, wobei bevorzugt eine Nicht-Eisenlegierung auf Kobalt-Basis und/oder Nickelbasis, insbesondere Kobalt-Chrom-Basis, Verwendung findet. Kommerziell sind derartige Werkstoffe als Stellite (R) bekannt und werden mittels eines (ein- oder mehrlagigen) Auftragsschweiß-Prozesses als erfindungsgemäßem Auftragsprozess auf einen zur Realisierung der Funktionsfläche relevanten Teilabschnitt des Werkzeug-Trägerkörpers gebracht.

Erfindungsgemäß erfolgt nach diesem Herstellen der Auftragsschicht deren Bearbeitung in eine Endform der Funktionsfläche, etwa durch geeignetes Zerspanen und/oder Abtragen, wobei für typische Dimensionierungen Erodierverfahren, etwa eine Funkenerosion, sich als besonders geeignet zu einer Ausformung der Funktionsfläche aus der Auftragsschicht erwiesen haben.

Wiederum erfindungsgemäß erfolgt nach dieser Bearbeitung das Durchführen eines CVD-Beschichtungsprozesses zumindest auf der bearbeiteten Funktionsfläche, so dass diese, bestehend bereits aus einem typischerweise hochfesten und verschleißarmen Kobalt-haltigen Werkstoff, zusätzlich eine CVD-Beschichtung zur weiteren Verschleißoptimierung erhält.

So hat es sich nämlich im Rahmen der Erfindung als überraschend wirksam herausgestellt, wenn der die Funktionsfläche realisierende Kobalt-haltige Werkstoff (etwa das Stellite) synergistisch mit der (typischerweise Ti,Zr,B,Cr,Cu,Mg,AL₂O₃ oder Hf als Beschichtungsmetall aufweisenden) CVD-Beschichtung zusammenwirkt und so überragende Schicht-Eigenspannungseigenschaften des beschichteten Werkstoffs mit positiven Verschleißeigenschaften kombiniert.

Insoweit ermöglicht die vorliegende Erfindung das Herstellen von Strangpresswerkzeugen, welche signifikant höhere Standzeiten anbieten und damit die ohnehin schon weit entwickelte Strangpresstechnologie weiteren Anwendungsgebieten (und auch Strangpressmaterialien) wirtschaftlich zugänglich macht.

Im Rahmen der Erfindung liegt es dabei, nicht nur die originäre Herstellung eines Strangpresswerkzeugs durch das erfindungsgemäße Verfahren zu ermöglichen, auch ist es als von dem erfindungsgemäßen "Herstellen" im Rahmen der Erfindung umfasst anzusehen, existierende Werkzeuge, etwa Strangpresswerkzeuge, in der Art einer Reparatur oder Überholung, durch die erfindungsgemäßen Schritte zu behandeln und so ein wirksames Wiederverwenden bzw. Rezyklieren (potentiell werthaltiger) Strangpresswerkzeuge zu ermöglichen.

In weiterbildungsgemäß vorteilhafter Weise hat es sich als günstig erwiesen, vor dem spanenden bzw. abtragenden Bearbeiten der hergestellten Auftragsschicht den Werkzeug-Trägerkörper einer Wärmebehandlung zu unterziehen, mit dem Zweck, Materialspannungen zu reduzieren. Ein derartiges Spannungsarmglühen (welches ergänzend oder alternativ auch nach dem spanenden bzw. abtragenden Bearbeiten zum Ausbilden der Funktionsfläche erfolgen kann) ermöglicht ein besonders gutes Haften der Auftragsschicht und sorgt so für zusätzliche Synergie.

Gleichermaßen hat es sich als vorteilhafte Weiterbildung der Erfindung erwiesen, wenn vor dem Herstellen der Auftragsschicht, also vor dem etwa mittels Auftragsschweißen durchgeführten Aufbringen des Kobalt-haltigen Werkstoffs, der Werkzeug-Trägerkörper eine Vorerwärmung erfährt. Eine derartige Vorerwärmung liegt bevorzugt im Bereich zwischen 400°C und 700°C und erreicht damit typischerweise eine untere Anlasstemperatur eines bevorzugt zur Realisierung des Werkzeug-Trägerkörpers einzusetzenden Warmarbeitsstahls. Insbesondere unter Gesichtspunkten einer Prozesskontrolle hat es sich weiterbildend als vorteilhaft erwiesen, die weiterbildungsgemäß vorzusehenden Wärmebehandlungsschritte des Werkzeug-Trägerkörpers vor dem Herstellen der Auftragsschicht und/oder des Werkzeug-Trägerkörpers mit aufgebrachter Auftragsschicht vor dem spanenden bzw. abtragenden Bearbeiten unter einer Schutzgasatmosphäre durchzuführen; auf diese Weise werden unerwünschte Reaktionen bzw. Oberflächenbeeinflussungen verhindert.

Das erfindungsgemäße Aufbringen der CVD-Beschichtung kann im Rahmen der Erfindung sowohl als Mitteltemperaturprozess (d.h. bei einer Beschichtungstemperatur zwischen ca. 700°C und ca. 950°C) erfolgen, als auch als sogenannter Hochtemperaturprozess (d.h. bei einer typischen Beschichtungstemperatur oberhalb von 950°C, weiter bevorzugt oberhalb von 1000°C). Eine besonders bevorzugte Variante des CVD-Beschichtungsprozesses im Rahmen der Erfindung liegt darin, die CVD-Beschichtung mehrlagig aufzubringen, dergestalt, dass auf eine (geeignet dann zähe) Mitteltemperatur-Schicht eine mittels Hochtemperatur-CVD aufgebrachte Deckschicht abgeschieden wird. Im Hinblick auf konkrete Parameter derartiger Beschichtungsvorgänge wird zur weiteren Offenbarung auf die WO 2012/175147 der Anmelderin verwiesen. Im Ergebnis ermöglicht es die vorliegende Erfindung damit, in überraschend wirksamer Weise und mit begrenztem herstellungstechnischem Aufwand (bei nach wie vor wirtschaftlich günstigem Materialeinsatz), überragend verschleißfeste Strangpresswerkzeuge herstellen, wobei die vorliegende Erfindung, über eine Werkzeug-Neuherstellung hinaus, gleichermaßen die Möglichkeit zu einer Reparatur bzw. Nachrüstung existierender Werkzeuge mit der erfindungsgemäßen Technologie bietet.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1:: ein schematisches Ablaufdiagramm mit den Verfahrensschritten des Verfahrens zum Herstellen eines Strangpresswerkzeugs gemäß einer bevorzugten Ausführungsform der Erfindung;
- Fig. 2:: eine Perspektivdarstellung eines Strangpresswerkzeugs nach dem Auftragsprozess mit dem Kobalt-haltigen Werkstoff gemäß Verfahren in Fig. 1;
- Fig. 3:: eine Perspektivansicht des Strangpresswerkzeugs der Fig. 2 nach dem spanenden Bearbeiten der gemäß Fig. 2 aufgetragenen Kobalt-haltigen Werkstoffschicht und
- Fig. 4:: eine schematische Seitenansicht einer Testvorrichtung zum Durchführen eines Verschleißtests für gemäß der vorliegenden Erfindung hergestellte Strangpresswerkzeuge.

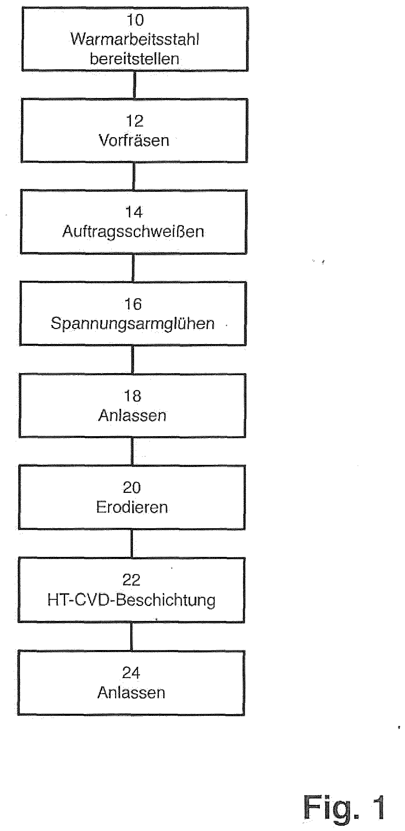

Unter Bezug auf die Fig. 1 bis 3 wird zunächst das erfindungsgemäße Verfahren zum Herstellen eines eine Funktionsfläche für metallisches Strangpressmaterial anbietenden Strangpresswerkzeugs gemäß einer ersten bevorzugten Ausführungsform der Erfindung beschrieben; die Fig. 1 verdeutlicht insoweit die Abfolge von Verfahrensschritten 10 bis 24.

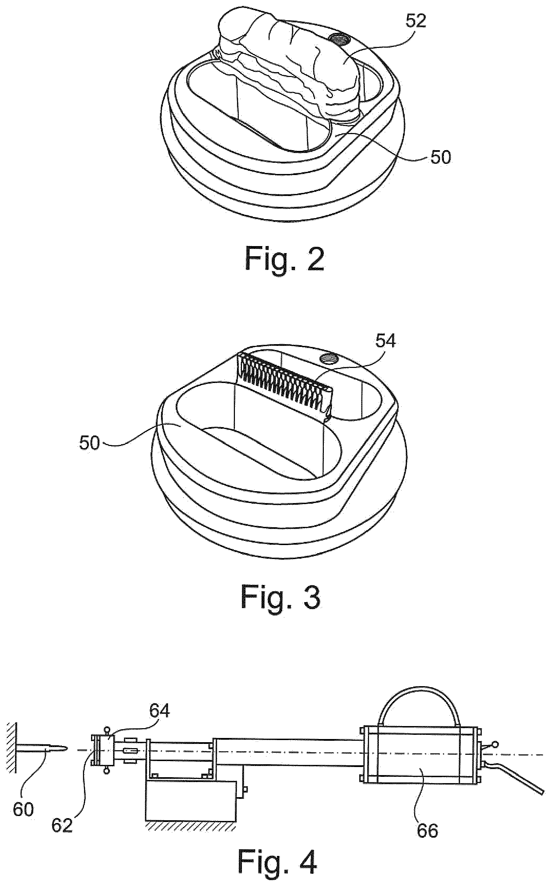

Entsprechend dem beschriebenen Ausführungsbeispiel wird in Schritt 10 ein Warmarbeitsstahl bereitgestellt und in Schritt 12 in eine Werkzeugform spanend bearbeitet; das Ausführungsbeispiel der Fig. 2 bzw. 3 zeigt insoweit ein Dornwerkzeug, welches im Zusammenwirken mit einem (nicht gezeigten) Matrizenwerkzeug etwa zum Strangpressen eines Aluminiumprofils ausgebildet ist. Bei dem Warmarbeitsstahl handelt es sich um Stahl des Typs 1.2344; ein maximaler Durchmesser des in den Fig. 2 bzw. 3 in verschiedenen Herstellungsstufen gezeigten Werkzeugs beträgt ca. 45 mm.

Nach dem spanenden Bearbeiten (Schritt 12) erfolgt ein mehrlagiges Auftragsschweißen mit Kobalt-haltigem Werkstoff des Typs Stellite 6, handelsüblich erhältlich etwa von der Firma Kennametal.

Dieses mehrlagige Auftragsschweißen erfolgt typischerweise bei 650°C, wobei dem Auftragsschweißen (im Verfahrensablauf der Fig. 1 nicht gezeigt) ein Wärmebehandlungsschritt, etwa bei einer Temperatur von 550°-700°C über eine Stunde, vorausgehen kann.

Die Fig. 2 zeigt das Ergebnis nach dem Aufbringen des Kobalt-haltigen Werkstoffs, bezeichnet durch das Bezugszeichen 52 und durch das Auftragsschweißen unlösbar verbunden mit dem unterliegenden Werkzeugkörper (Werkzeug-Trägerkörper) 50 aus dem Warmarbeitsstahl.

Im nachfolgenden Schritt 16 erfolgt über einen Zeitraum von ca. 2 Stunden ein Spannungsarm-Glühen der in Fig. 2 gezeigten Konfiguration bei ca. 550° - 700°C. Diesem schließt sich, Schritt 18, ein weiterer Wärmebehandlungsschritt an, etwa ein Anlassen (bei einer typischen Anlasstemperatur von ca. 580°C bis 600°C). Dieser Wärmebehandlungsschritt 18 ist vorteilhaft, jedoch zum Erreichen der erfindungsgemäßen Vorteile nicht notwendig.

Nach diesen Behandlungsschritten erfolgt gemäß Schritt 20 das spanende bzw. abtragende Bearbeiten der Auftragsschicht 52 in Funktionsflächen 54, wie sie in der Fig. 3 gezeigt sind. In dieser erfindungsgemäßen Realisierung erfolgt diese Bearbeitung durch ein Funkenerodieren, mit dem Zweck, die Funktionsfläche entsprechend dem gewünschten Verlauf bzw. der konkreten Ausgestaltung (im dargestellten Ausführungsbeispiel zum Realisieren von Zwischenrippen im Strangpressprodukt) auszuformen. Das Ergebnis dieses Materialabtrags zeigt die Fig. 3.

Im Rahmen des erfindungsgemäßen Ausführungsbeispiels schließt sich an gemäß Verfahrensschritt 22 eine CVD-Beschichtung, welche zumindest auf den aufgebrachten und dann spanend bzw. abtragend bearbeiteten Bereich 54 aufgebracht wird, in der praktischen Realisierung auf dem gesamten Werkzeug. In ansonsten bekannter Weise, verwiesen wird etwa auf den Stand der Technik gemäß EP 1 011 884 B1, wird etwa bei einer typischen Hochtemperatur-CVD-Beschichtungstemperatur von 1050°C Al₂O₃ aus der Gasphase abgeschieden und erzeugt somit eine Beschichtung auf der Funktionsfläche bzw. dem Werkzeug. Ein nachfolgendes Anlassen (Schritt 24) auf eine typische Anlasstemperatur im Bereich von ca. 500°C - 600°C beendet den Herstellungsprozess und erzeugt das fertiggestellte Strangpressswerkzeug.

Im praktischen Betrieb hat es sich als positiv herausgestellt, dass im Vergleich zu ansonsten baugleichen, CVD-beschichteten Werkzeugen gemäß EP 1 011 884 B1 eine um ca. 30 % bis 50 % verbesserte Verschleißfestigkeit realisiert werden kann, was sich in entsprechend verlängerten Betriebs- bzw. Standzeiten des Werkzeugs niederschlägt.

Zur Gewinnung derartiger Vergleichsdaten hat es sich dabei als bevorzugt herausgestellt, eine in Fig. 4 skizzenhaft dargestellte Vorrichtung zu verwenden, welche der Herstellung von Verschleißdaten, insbesondere von CVD-beschichteten Strangpresswerkzeugen, dient, und im Vergleichswege Abschätzungen über Verschleißfestigkeitseigenschaften ermöglicht. Konkret wird zu diesem Zweck eine im linken Bereich der Fig. 4 schematisch gezeigte und drehfest befestige Probe 60 (gefertigt aus einem Warmarbeitsstahl und versehen mit den weiteren Verfahrensschritten 12 bis 24 gemäß der Erfindung) zusammengeführt mit einem Reibpartner 62, welcher, realisiert als Aluminiumlegierung und gehalten in einer Trägereinheit 64, unter Druck und rotatorisch angetrieben von einer Dreheinheit 66 zum Erzeugen von Reibung mit der Probe 60 zusammengeführt wird. Konkret erfolgt das Zusammenwirken bei Drehzahlen von ca. 40 bis 100/min. und einem Anpressdruck von ca. 2 bar bis 8 bar; bei dieser Konfiguration wird darauf geachtet, dass eine Temperatur des Reibpartners 62 (welcher entsprechend der konusförmigen Kontur der Probe 60 einen Innenkonus ausbildet) eine Betriebstemperatur von ca. 300°C nicht überschreitet, so dass es zu keinem Schmelzen od.dgl. Unbrauchbarwerden des Reibpartners kommt.

Wird nunmehr, geprüft über verschiedene Zeitabschnitte, ein Verschleißzeitpunkt festgestellt, zu welchem das Werkzeug (Probe 60) die Verschleißgrenze erreicht (indem etwa Werkzeug- bzw. Substratstücke ausreißen), steht bei vergleichbaren Testbetriebsbedingungen ein Maß zur Verfügung, um im Wege von Relativmessungen die Vorteile der vorliegenden Erfindung relativ zu gattungsgemäß CVD-beschichteten Strangpresswerkzeugen festzustellen.

## Patentansprüche

1. Verfahren zum Herstellen eines eine Funktionsfläche für metallisches Strangpressmaterial anbietenden Strangpresswerkzeugs mit den Schritten:
- Bereitstellen (10) eines Werkzeug-Trägerkörpers (50),
- Aufbringen (14) eines Kobalt- und/oder Nickel-haltigen schweißbaren Werkstoffs auf einem Teilabschnitt des Werkzeug-Trägerkörpers mittels eines gefügewirksamen Auftragsprozesses zum Herstellen einer unlösbaren Auftragsschicht (52),
- spanendes und/oder abtragendes Bearbeiten (20) der Auftragsschicht zum Ausbilden der Funktionsfläche (54) des Strangpresswerkzeugs und
- Durchführen eines CVD-Beschichtungsprozesses (22) mit einem Reaktionsgas zumindest auf der Funktionsfläche.

2. Verfahren nach Anspruch 1, **dadurch gekennzeichnet, dass** der gefügewirksame Auftragsprozess durch ein ein- oder mehrlagiges Auftragsschweißen (14) realisiert ist.

3. Verfahren nach Anspruch 1 oder 2, **dadurch gekennzeichnet, dass** vor dem spanenden bzw. abtragenden Bearbeiten der Werkzeug-Trägerkörper mit der hergestellten Auftragsschicht wärmebehandelt (16) wird, insbesondere einem Glühprozess zur Spannungsreduktion unterzogen wird.

4. Verfahren nach einem der Ansprüche 1 bis 3, **dadurch gekennzeichnet, dass** das spanende bzw. abtragende Bearbeiten durch Fräsen oder Erodieren, insbesondere eine Funkenerosionsbearbeitung (20), durchgeführt wird.

5. Verfahren nach einem der Ansprüche 1 bis 4, **dadurch gekennzeichnet, dass** vor dem Herstellen der Auftragsschicht ein Vorformen und/oder Vorzerspannen (12) des Werkzeugs-Trägerkörpers, insbesondere im Bereich des Teilabschnitts, durchgeführt wird.

6. Verfahren nach einem der Ansprüche 1 bis 5, **dadurch gekennzeichnet, dass** vor dem Herstellen der Auftragsschicht eine Vorerwärmung des aus einem Warmarbeitsstahl realisierten Werkzeug-Trägerkörpers, insbesondere auf eine Temperatur zwischen 400°C und 700°C und/oder eine Anlasstemperatur des Warmarbeitsstahls, durchgeführt wird.

7. Verfahren nach einem der Ansprüche 1 bis 6, **dadurch gekennzeichnet, dass** ein Vorwärmen des Werkzeug-Trägerkörpers vor dem Aufbringen des Kobalt-haltigen Werkstoffs und/oder eine Glühbehandlung des Werkzeug-Trägerkörpers mit hergestellter Auftragsschicht unter Schutzgas erfolgt.

8. Verfahren nach einem der Ansprüche 1 bis 7, **dadurch gekennzeichnet, dass** der Kobalt-haltige Werkstoff als Nicht-Eisenlegierung auf Kobalt-Basis, insbesondere Kobalt-Chrom-Basis und/oder Nickel-Basis, ausgewählt wird.

9. Verfahren nach einem der Ansprüche 1 bis 8, **gekennzeichnet durch** ein Wärmebehandeln (24) des Strangpress-Werkzeugs nach dem CVD-Beschichtungsprozess mit einer Anlass- und/oder Warmauslagerungstemperatur.

10. Verfahren nach einem der Ansprüche 1 bis 9, **dadurch gekennzeichnet, dass** der ein- oder mehrschichtige CVD-Beschichtungsprozess als Mitteltemperaturprozess bei einer Beschichtungstemperatur im Bereich zwischen 700°C und 950°C und/oder als Hochtemperaturprozess bei einer Beschichtungstemperatur oberhalb von 950°C, insbesondere oberhalb von 1000°C, weiter bevorzugt zum Herstellen einer Deckschicht auf einer durch den Mitteltemperaturprozess hergestellten CVD-Beschichtung, durchgeführt wird.

11. Verfahren nach einem der Ansprüche 1 bis 10, **dadurch gekennzeichnet, dass** das Strangpresswerkzeug als zweiteiliges Werkzeug aufweisend ein Dornteil sowie eine Matrizenplatte ausgebildet ist und auf dem Dornteil sowie auf der Matrizenplatte jeweils zumindest abschnittsweise die unlösbare Auftragsschicht hergestellt ist.

12. Verfahren nach einem der Ansprüche 1 bis 11, **dadurch gekennzeichnet, dass** die Funktionsfläche als einen Führungs- und/oder Flusskanal für das duktile Strangpressmaterial ausbildende Begrenzungswand des Strangpresswerkzeugs realisiert ist.

13. Verfahren zum Messen eines Oberflächenverschleißes eines mit dem Verfahren nach einem der Ansprüche 1 bis 12 hergestellten Strangpresswerkzeugs, **gekennzeichnet durch** die Schritte :
- Herstellen einer ersten Probe als Strangpresswerkzeug mit einer Beschichtung, mittels des Verfahrens nach einem der Ansprüche 1 bis 12,
- Zusammenführen der ersten Probe mit einem eine Aluminiumlegierung, insbesondere eine ein Aluminium-Strangpressmaterial realisierenden Legierung, aufweisenden Reibepartner, welcher mittels einer Relativdrehung unter vorbestimmter oder einstellbarer Relativdrehzahl und unter einem vorbestimmten oder einstellbaren Reibdruck mit der ersten Probe zusammenwirkt,
- Erfassen eines Oberflächen-Verschleißzustands der Probe nach mindestens einem bevorzugt vorbestimmten Zeitablauf des Zusammenwirkens und
- Vergleichen des Verschleißzustands oder eines einem vorbestimmten oder definierten Verschleißzustands zugeordneten Zeitablaufs mit mittels des Verfahrens erfassten Werten einer eine andere Beschichtung aufweisenden zweiten Probe.

14. Verfahren nach Anspruch 13, **gekennzeichnet durch** das Übertragen und/oder Extrapolieren eines Messwertverhältnisses, insbesondere eines Zeitablaufverhältnisses, der zweiten zu der ersten Probe auf ein mit der Beschichtung mittels des Verfahrens nach einem der Ansprüche 1 bis 12 hergestelltes Strangpresswerkzeug zur Ermittlung, Bestimmung oder Prognose des Oberflächenverschleißverhaltens dieses Strangpresswerkzeugs.

## Claims

1. A method for producing an extrusion die having a functional surface for metal extrusion material, comprising the steps of:
- providing (10) a die support body (50)
- applying (14) a weldable material containing cobalt and/or nickel onto a partial region of the die support body by means of a metal-structure-effecting application process for producing an inseparable application layer (52),
- machining (20) the deposition layer in a chipping and/or material removal process to form the functional surface (54) of the extrusion die, and
- performing a CVD-coating process (22) with a reaction gas at least on the functional surface.

2. The method according to claim 1, **characterized in that** the structure-affecting application process is carried out by single- or multilayer build-up welding (14).

3. The method according to claim 1 or 2, **characterized in that** the tool support body with the applied deposition layer is subjected to heat treatment (16), in particular to an annealing process for stress reduction prior to the machining operation for chipping and/or material removal.

4. The method according to one of claims 1 to 3, **characterized in that** the chipping or material-removing machining is performed by means of milling or eroding, in particular by means of a spark eroding treatment (20).

5. The method according to one of claims 1 to 4, **characterized in that** prior to producing the application layer a preliminary forming and/or preliminary chipping (12) of the tool support body is performed, in particular in the region of the partial section.

6. The method according to one of claims 1 to 5, **characterized in that** prior to producing the application layer is performed a pre-heating of the tool support body realized by a hot-working steel, in particular up to a temperature between 400°C and 700°C and/or an annealing temperature of the hot-working steel.

7. The method according to one of claims 1 to 6, **characterized in that** a pre-heating of the tool support body is effected prior to application of the cobalt-containing material and/or an annealing treatment of the tool support body with the produced application layer in a shielding gas atmosphere.

8. The method according to one of claims 1 to 7, **characterized in that** the cobalt-containing material is selected as a non-ferrous alloy on a cobalt base, in particular a cobalt-chromium base and/or nickel base.

9. The method according to one of Claims 1 to 8, **characterized by** a heat treatment (24) of the extrusion die after the CVD coating process with an annealing and/or artificial ageing temperature.

10. The method according to one of claims 1 to 9, **characterized in that** the single-or multilayer CVD coating process is carried out as a medium-temperature process at a coating temperature in a range between 700° C and 950° C, and/or as a high-temperature process at a coating temperature above 950° C, in particular above 1000°C, further preferably for producing a covering layer on top of a CVD coating produced by the medium-temperature process.

11. The method according to one of claims 1 to 10, **characterized in that** the extrusion die is produced as tool comprising two parts, comprising a mandrel part as well as a die plate, and the inseparable application layer is produced at least on sections of both the mandrel part and the die plate.

12. The method according to one of claims 1 to 11, **characterized in that** the functional surface is realized as the delimiting wall of the extrusion die defining a guide and/or flow channel for the ductile extrusion material.

13. A method for measuring surface wear of an extrusion die produced by a method according to one of claims 1 to 12, comprising the steps of:
- producing a first sample as the extrusion die with a coating,
- bringing the first sample into contact with a friction partner that comprises an aluminum alloy, particularly an alloy used to create an aluminum extrusion substance, which acts on the first sample by relative rotation at a predetermined or adjustable relative rotating speed and under predetermined or adjustable pressure,
- recording a surface wear condition of the sample after at least one preferably predetermined interaction time, and
- comparing the wear condition or a time period assigned to a predetermined or defined wear condition with values recorded by the method for a second sample having a different coating.

14. The method of according to claim 13, **characterized by** the transfer and/or extrapolation of a ratio between measurement values, in particular a chronological ratio, between the second and the first samples onto an extrusion die produced by means of the method according to one of claims 1 to 12 in order to determine, define or forecast the surface wear behavior of said extrusion die.

## Revendications

1. Procédé destiné à la fabrication d'un outil d'extrusion offrant une surface fonctionnelle pour matériau extrudable métallique avec les étapes suivantes :
- préparation (10) d'un corps de maintien d'outil (50) ;
- application (14) d'un matériau soudable contenant du cobalt et/ou du nickel sur une section partielle du corps de maintien d'outil à l'aide d'une opération d'apport à structure active destinée à la fabrication d'une couche d'apport (52) insoluble ;
- opération d'enlèvement de copeaux et/ou de décapage (20) de la couche d'apport pour former la surface fonctionnelle (54) de l'outil d'extrusion ; et
- mise en oeuvre d'une opération de revêtement CVD (22) par dépôt chimique en phase vapeur avec un gaz réactif au moins sur la surface fonctionnelle.

2. Procédé selon la revendication 1, **caractérisé en ce que** l'opération d'apport à structure active est réalisée au travers d'une soudure par apport (14) mono ou multicouche.

3. Procédé selon la revendication 1 ou 2, **caractérisé en ce qu'**avant l'opération d'enlèvement de copeaux et/ou de décapage, le corps de maintien d'outil est traité thermiquement (16) avec la couche d'apport fabriquée, notamment soumis à une opération de recuit pour réduire les tensions.

4. Procédé selon l'une quelconque des revendications 1 à 3, **caractérisé en ce que** l'opération d'enlèvement de copeaux et/ou de décapage est réalisée par fraisage ou érosion, notamment sous la forme d'une opération d'érosion par étincelage (20).

5. Procédé selon l'une quelconque des revendications 1 à 4, **caractérisé en ce qu'**avant la fabrication de la couche d'apport, un préformage et/ou prétension (12) du corps de maintien d'outil est réalisé, notamment dans la zone de la section partielle.

6. Procédé selon l'une quelconque des revendications 1 à 5, **caractérisé en ce qu'**avant la fabrication de la couche d'apport, un préchauffage du corps de maintien d'outil est réalisé à partir d'un acier pour usinage à chaud, notamment à une température comprise entre 400°C et 700°C et/ou une température de recuit de l'acier pour usinage à chaud.

7. Procédé selon l'une quelconque des revendications 1 à 6, **caractérisé en ce qu'**un préchauffage du corps de maintien d'outil est réalisé avant l'application de la matière contenant du cobalt et/ou qu'une opération de recuit du corps de maintien d'outil est réalisée avec la couche d'apport fabriquée sous gaz de protection.

8. Procédé selon l'une quelconque des revendications 1 à 7, **caractérisé en ce que** la matière contenant du cobalt est sélectionnée sous la forme d'un alliage sans fer à base de cobalt, notamment une base de cobalt-chrome et/ou une base de nickel.

9. Procédé selon l'une quelconque des revendications 1 à 8, **caractérisé par** un traitement thermique (24) de l'outil d'extrusion après l'opération de revêtement CVD par dépôt chimique en phase vapeur avec une température de recuit et/ou de vieillissement à chaud.

10. Procédé selon l'une quelconque des revendications 1 à 9, caractérisé en ce l'opération de revêtement CVD par dépôt chimique en phase vapeur mono ou multicouche est réalisée sous la forme d'une opération à moyenne température à une température de revêtement dans la plage comprise entre 700°C et 950°C et/ou sous la forme d'une opération à haute température à une température de revêtement supérieure à 950°C, notamment supérieure à 1000°C, de façon davantage préférée pour la fabrication d'une couche de finition sur un revêtement CVD par dépôt chimique en phase vapeur fabriqué par le biais d'une opération à moyenne température.

11. Procédé selon l'une quelconque des revendications 1 à 10, **caractérisé en ce que** l'outil d'extrusion est réalisé sous la forme d'une partie de mandrin comportant un outil en deux parties ainsi que d'une plaque de matrice et que la couche d'apport insoluble est respectivement fabriquée au moins en partie sur la partie de mandrin ainsi que sur la plaque de matrice.

12. Procédé selon l'une quelconque des revendications 1 à 11, **caractérisé en ce que** la surface fonctionnelle est réalisée sous la forme d'un canal de guidage et/ou d'écoulement pour la paroi de délimitation de l'outil d'extrusion formant le matériau extrudable ductile.

13. Procédé de mesure d'une usure superficielle d'outil d'extrusion fabriqué avec le procédé selon l'une quelconque des revendications 1 à 12, **caractérisé par** les étapes suivantes :
- fabrication d'un premier échantillon servant d'outil d'extrusion avec un revêtement, à l'aide du procédé selon l'une quelconque des revendications 1 à 12 ;
- mise en contact du premier échantillon avec un partenaire de frottement comportant un alliage d'aluminium, notamment un alliage formant un matériau extrudable en aluminium, ledit partenaire interagissant par rotation relative avec le premier échantillon à une vitesse de rotation relative prédéterminée ou réglable et à une pression de frottement prédéterminée ou réglable ;
- détection d'un état d'usure superficielle de l'échantillon après au moins écoulement d'un temps écoulé, préférentiellement prédéterminé, de l'interaction ; et
- comparaison de l'état d'usure ou d'un temps écoulé associé à un état d'usure prédéterminé ou défini avec des valeurs, déterminées à l'aide du procédé, d'un deuxième échantillon comportant un autre revêtement.

14. Procédé selon la revendication 13, **caractérisé par** la transmission et/ou l'extrapolation d'un rapport de valeur de mesure, notamment d'un rapport de temps écoulé, du deuxième au premier échantillon sur un outil d'extrusion fabriqué avec un revêtement à l'aide du procédé selon l'une quelconque des revendications 1 à 12 pour calculer, déterminer, ou établir un pronostic du comportement d'usure superficielle de cet outil d'extrusion.
